# EUROPÄISCHE PATENTSCHRIFT

(11) **EP 0 800 025 B1**
(45) Veröffentlichungstag und Bekanntmachung des Hinweises auf die Patenterteilung: **15.05.2002**
(21) Anmeldenummer: 97102480.7
(22) Anmeldetag: 15.02.1997
(51) Int. Cl.: F16H 61/28

(54) **Stelleinrichtung zur Automatisierung von Handschaltgetrieben von Kraftfahrzeugen**
Gear change device for automation of manual gearboxes of motor vehicles
Dispositif de commande pour automatiser le changement de vitesse pour boîte de vitesses manuelle des véhicules automobiles

(30) Priorität: 18.03.1996 DE 19610491
(43) Veröffentlichungstag der Anmeldung: 08.10.1997
(73) Patentinhaber: HYDRAULIK-RING ANTRIEBS- UND STEUERUNGSTECHNIK GmbH, D-72622 Nürtingen (DE)
(72) Erfinder: Tischer, Dieter, 73240 Wendlingen (DE)
(74) Vertreter: Kohl, Karl-Heinz

(56) Entgegenhaltungen:
- DE-A- 19 627 980
- GB-A- 1 081 707
- US-A- 5 150 629

## Beschreibung

Die Erfindung betrifft eine Stelleinrichtung zur Automatisierung von Handschaltgetrieben von Kraftfahrzeugen nach dem Oberbegriff des Anspruches 1 bzw. 2. Als Ausgangspunkt kann die US-A-5 150 629 angesehen werden.

Bei Handschaltgetrieben ist es bekannt, mit einem von unten in den Fahrgastraum ragenden Schalthebel die jeweiligen Gänge des Kraftfahrzeuges einzulegen. Um ein solches Handschaltgetriebe zu automatisieren, sind Stelleinrichtungen bekannt, die winklig oder parallel zueinander angeordnete Stelleinheiten aufweisen. Mit ihnen kann die Schaltwelle des Getriebes entsprechend gedreht und verschoben werden.

Der Erfindung liegt die Aufgabe zugrunde, die gattungsgemäße Stelleinrichtung so auszubilden, daß sie bei einfacher konstruktiver Ausbildung nur eine geringe Bauhöhe aufweist.

Diese Aufgabe wird bei der gattungsgemäßen Stelleinrichtung erfindungsgemäß mit den kennzeichnenden Merkmalen des Anspruches 1 bzw. 2 gelöst.

Bei der erfindungsgemäßen Stelleinrichtung nach Anspruch 1 ist zum Drehen und Verschieben der Schaltwelle des Getriebes nur ein einziger Antrieb vorgesehen. Mit ihm wird das Steuerelement gedreht, das mit der Kulissenführung und der Steuerbahn versehen ist. Über die Kulissenführung kann die Schaltwelle in der erforderlichen Richtung axial verschoben werden, während mit Hilfe der Steuerbahn die Schaltwelle in der erforderlichen Richtung gedreht wird. Somit kann durch Verdrehen und Verschieben der Schaltwelle die jeweilige Gasse angefahren bzw. der jeweilige Gang eingelegt werden. Die erfindungsgemäße Stelleinrichtung besteht nur aus wenigen Bauteilen, ist darum konstruktiv einfach ausgebildet und kann preisgünstig gefertigt werden. Zudem benötigt sie nur eine geringe Bauhöhe, so daß die Stelleinrichtung auch dort eingebaut werden kann, wo nur sehr wenig, insbesondere nur sehr niedriger Einbauraum zur Verfügung steht.

Die erfindungsgemäße Stelleinrichtung nach Anspruch 2 hat das drehbare Steuerelement, in dessen Kulissenführung das Führungselement des Steuerarmes eingreift. Entsprechend dem Verlauf der Kulissenführung wird das Steuerelement verstellt. Da es drehfest mit der Schaltwelle verbunden ist, wird diese in entsprechendem Maße um ihre Achse gedreht. Auf diese Weise wird die erforderliche Gasse des Getriebes angefahren.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsbeispiele näher erläutert. Es zeigen
- Fig. 1: im Längsschnitt eine erste Ausführungsform einer erfindungsgemäßen Stelleinrichtung,
- Fig. 2: eine Ansicht längs der Linie A-A in Fig. 1,
- Fig. 3: eine Abwicklung eines Steuerelementes der Stelleinrichtung gemäß Fig. 1,
- Fig. 4: einen Schnitt längs der Linie B-B in Fig. 1,
- Fig. 5: eine Seitenansicht eines Antriebes der Stelleinrichtung,
- Fig. 6: in perspektivischer und explosiver Darstellung eine zweite Ausführungsform einer erfindungsgemäßen Stelleinrichtung,
- Fig. 7: einen Schnitt längs der Linie C-D in Fig. 9,
- Fig. 8: eine Unteransicht eines Steuerelementes der Stelleinrichtung gemäß Fig. 6,
- Fig. 9: einen Schnitt längs der Linie A-B in Fig. 8,
- Fig. 10: teilweise im Schnitt und teilweise in Ansicht ein Steuerelement einer dritten Ausführungsform einer erfindungsgemäßen Stelleinrichtung,
- Fig. 11: eine Kulissenführung des Steuerelementes gemäß Fig. 10.

Die Stelleinrichtungen sind zur Automatisierung von Handschaltgetrieben von Kraftfahrzeugen vorgesehen. Mit den Stelleinrichtungen kann die Schaltwelle des Getriebes des Kraftfahrzeuges für die Gassen- und die Gangwahl um ihre Achse gedreht und axial verschoben werden.

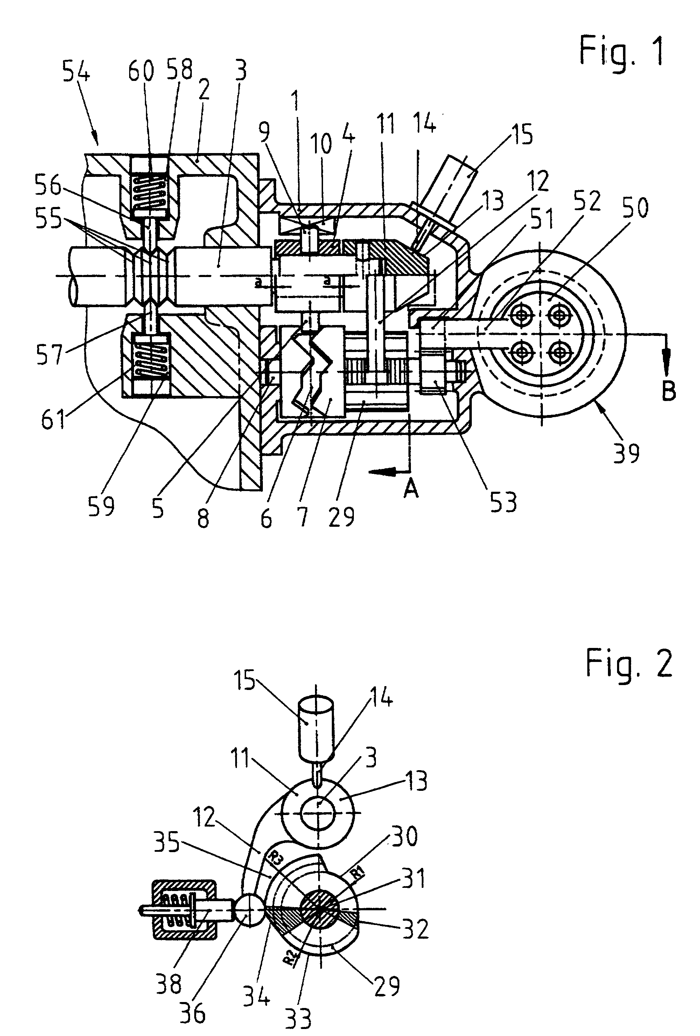

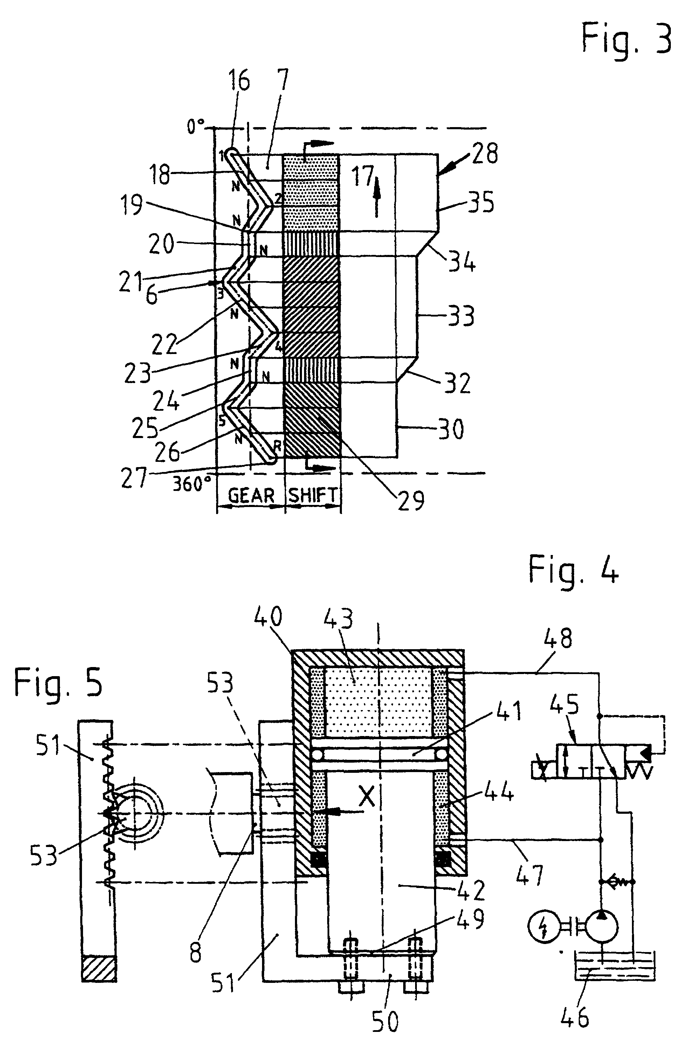

Die Stelleinrichtung gemäß den Fig. 1 bis 5 ist in einem Gehäuse 1 untergebracht, das an ein Getriebegehäuse 2 des Kraftfahrzeuges angeflanscht ist. In das Gehäuse 1 ragt aus dem Getriebegehäuse 2 eine Schaltwelle 3 des Getriebes. Innerhalb des Gehäuses 1 sitzt auf der Schaltwelle 3 axial unverschieblich eine Hülse 4, die mit einem radial abstehenden Bolzen 5 in eine schlitzförmige Kulissenführung 6 eingreift. Sie ist am Umfang eines Steuerteiles 7 vorgesehen, der auf einer parallel zur Schaltwelle 3 im Gehäuse 1 gelagerten Achse 8 sitzt. Wie die Fig. 1 und 3 zeigen, hat die Kulissenführung 6 je nach einzulegendem Gang unterschiedliche Steigungsabschnitte.

Die Hülse 4 wird durch einen weiteren radial abstehenden Bolzen 9 gegen Verdrehen um ihre Achse gesichert. Die Schaltwelle 3 kann für die Gassenwahl in noch zu beschreibender Weise relativ zur Hülse 4 um ihre Achse gedreht werden. Zur Drehsicherung der Hülse 4 wirkt der Bolzen 9 mit in Achsrichtung der Schaltwelle 3 verlaufenden Führungen 10 zusammen, zwischen welche der Bolzen 9 eingreift. Die Führungen 10 sind so lang, daß der Bolzen 9 beim Axialverschieben der Schaltwelle 3 nicht außer Eingriff mit den Führungen 10 kommt.

Auf der vom Getriebegehäuse 2 abgewandten Seite der Hülse 4 sitzt drehfest und axial unverschieblich eine weitere Hülse 11, von der ein Steuerarm 12 quer absteht. Die Hülse 11 hat eine im Axialschnitt etwa konische Meßfläche 13, die in Richtung auf die Stirnseite der Hülse 11 verjüngt ausgebildet ist. Außerdem hat die Meßfläche 13 in Umfangsrichtung eine Steigung. An der Meßfläche 13 liegt ein Taster 14 eines Wegmeßsystems 15 unter Druck, beispielsweise unter Federkraft, an. Wird die Schaltwelle 3 und damit die Hülse 11 axial verschoben, dann wird der Taster 14 je nach Verschieberichtung der Schaltwelle 3 in das Wegmeßsystem geschoben oder aus ihm herausgedrückt. Damit ist eine genaue axiale Lagebestimmung der Schaltwelle 3 möglich. Da die Meßfläche 13 in Umfangsrichtung eine Steigung aufweist, wird auch beim Drehen der Schaltwelle 3 um ihre Achse eine Lagebestimmung mittels des Wegmeßsystems 15 erreicht.

Das Wegmeßsystem 15 ist an die Außenseite des Gehäuses 1 angeflanscht. Der Meßtaster 14 ragt durch eine Gehäuseöffnung und liegt unter Druck an der Meßfläche 13 der Hülse 11 an.

Das Steuerteil 7 ist hülsenförmig ausgebildet und weist die in Umfangsrichtung sich erstreckende Kulissenführung 6 auf, die in Umfangsrichtung ansteigende und abfallende Abschnitte hat. In Fig. 3 ist in der Abwicklung die Ausbildung dieser Kulissenführung 6 dargestellt. Wird das Steuerteil 7 um seine Achse gedreht, dann wird entsprechend der Steigung der verschiedenen Abschnitte der Kulissenführung 6 die Hülse 4 infolge ihres Eingriffes mittels des Bolzens 5 in Achsrichtung nach vorn oder nach hinten verschoben. Da die Hülse 4 axial fest auf der Schaltwelle 3 sitzt, wird sie in entsprechendem Maße axial mitgenommen. Wie die Abwicklung gemäß Fig. 3 zeigt, befindet sich der Bolzen 5 am einen Ende 16 der Kulissenführung 6. In dieser Lage ist die Hülse 4 und damit die Schaltwelle 3 axial in das Getriebegehäuse 2 verschoben, um den ersten Gang einzulegen. Wird das Steuerteil 7 in Pfeilrichtung 17 (Fig. 3) gedreht, wird infolge des in Umfangsrichtung abfallenden Abschnittes 18 der Kulissenführung 6 die Hülse 4 über den Bolzen 5 axial in das Gehäuse 1 geschoben, bis am Ende dieses Abschnittes 18 der zweite Gang eingelegt ist. Um vom zweiten Gang in die Neutralstellung N zu gelangen, wird das Steuerteil 7 in Drehrichtung 17 weitergedreht, wobei der Bolzen 5 aus dem Abschnitt 18 in den in Drehrichtung wieder ansteigenden Abschnitt 19 der Kulissenführung 6 gelangt. Ist die Neutralstellung N erreicht, geht dieser ansteigende Abschnitt 19 in einen in Umfangsrichtung verlaufenden Abschnitt 20 über. Befindet sich der Bolzen 5 im Abschnitt 19, wird die Hülse 4 und damit die Schaltwelle 3 beim Drehen der Hülse 4 wieder in das Getriebegehäuse 2 geschoben. Ist die Neutralstellung N erreicht, gelangt der Bolzen 5 in den Abschnitt 20. Da er in Umfangsrichtung des Steuerteiles 7 verläuft, bleibt die Hülse 4 beim Drehen des Steuerteiles 7 in ihrer axialen Lage, d.h. die Hülse 4 und die Schaltwelle 3 werden nicht verschoben.

Um aus der Neutralstellung N in den dritten Gang zu gelangen, schließt an den Abschnitt 20 ein in Drehrichtung 17 des Steuerteiles 7 ansteigender Abschnitt 21 an, der in einen in Drehrichtung 17 wieder absteigenden Abschnitt 22 übergeht. In ihm bewegt sich der Bolzen 5, wenn vom dritten in den vierten Gang geschaltet wird. Wie beim Schalten vom ersten in den zweiten Gang überfährt der Bolzen 5 hierbei die Neutralstellung N. Aus dem vierten Gang kann wieder in die Neutralstellung N geschaltet werden, da der Abschnitt 22 in einen in Drehrichtung 17 wieder ansteigenden Abschnitt 23 übergeht. An ihn schließt ein Abschnitt 24 an, der ebenso wie der Abschnitt 20 in Umfangsrichtung des Steuerteils 7 verläuft. Dadurch wird die Hülse 4 nicht axial verschoben, wenn sich ihr Bolzen 5 in diesem Abschnitt 24 befindet.

Aus dieser Neutralstellung kann dadurch in den fünften Gang geschaltet werden, daß der Bolzen 5 der Hülse 4 in einen in Drehrichtung 17 wieder ansteigenden Abschnitt 25 gelangt. An ihn schließt ein Abschnitt 26 an, der in Drehrichtung 17 abfällt und die Neutralstellung N überfährt. Mittels dieses Abschnittes 26 kann in den Rückwärtsgang R geschaltet werden. Er wird dann eingelegt, wenn sich der Bolzen 5 der Hülse 4 in Anlage am Ende 27 des Abschnittes 26 bzw. der Kulissenführung 6 befindet.

Auf diese Weise kann durch Drehen des Steuerteils 7 die Hülse 4 und damit die Schaltwelle 3 im gewünschten Maße axial verschoben werden, um die verschiedenen Gänge einzulegen.

Die verschiedenen Gänge können erst dann eingelegt werden, wenn die entsprechende Gasse des Getriebes angefahren worden ist. Hierzu dient die Hülse 11 mit dem Steuerarm 12, der mit einer Steuerfläche 28 zusammenwirkt, die auf dem Umfang eines weiteren Steuerteiles 29 vorgesehen ist. Die Steuerfläche 28 hat entsprechend der jeweiligen Gasse unterschiedliche Höhen, wie die Abwicklung in Fig. 3 zeigt. Im Bereich des Rückwärtsganges R und des fünften Ganges hat die Steuerfläche 28 einen Abschnitt 30 mit einer vorgegebenen Ausgangshöhe. Wie Fig. 2 zeigt, liegt dieser Steuerflächenabschnitt 30 auf einem Radius R₁ um die Drehachse 31 des Steuerteiles 29. Wird die Schaltwelle 3 durch die Hülse 4 in der beschriebenen Weise zum Einlegen des fünften Ganges und des Rückwärtsganges R axial verschoben, wird die Schaltwelle 3 nicht um ihre Achse gedreht, da in diesem Bereich der Steuerflächenabschnitt 30 vorgesehen ist, der den Radius R₁ hat.

Am Übergang vom Abschnitt 25 der Kulissenführung 6 in deren Abschnitt 24 hat die Steuerfläche 28 einen Steigungsabschnitt 32, der den Steuerflächenabschnitt 30 mit einem Steuerflächenabschnitt 33 verbindet. Der Steuerflächenabschnitt 33 liegt wiederum auf einem Zylinder, der jedoch im Vergleich zum Steuerflächenabschnitt 30 den größeren Radius R₂ hat (Fig. 2). Der Steigungsabschnitt 32 ist dem Abschnitt 24 der Kulissenführung 6 zugeordnet. In diesem Abschnitt 24 wird die Hülse 4 nicht axial verschoben. Dafür wird die Schaltwelle 3 in noch zu beschreibender Weise über den Steigungsabschnitt 32 um ihre Achse gedreht, wodurch die entsprechende Gasse des Getriebes angefahren wird.

Dem Übergang des Abschnittes 24 in den Abschnitt 23 der Kulissenführung ist der Übergang vom Steigungsabschnitt 32 in den Steuerflächenabschnitt 33 zugeordnet. Werden daher die Gänge 3 und 4 eingelegt, wird über die Hülse 4 und den Bolzen 5 die Schaltwelle 3 in der erforderlichen Richtung axial verschoben. Da in diesem Bereich der Steuerflächenabschnitt 33 mit dem Radius R₂ vorgesehen ist, wird die Schaltwelle 3 hierbei nicht um ihre Achse gedreht.

Der Steuerflächenabschnitt 33 ist über einen weiteren Steigungsabschnitt 34 mit einem Steuerflächenabschnitt 35 verbunden, der wiederum auf einem gedachten Zylindermantel liegt, der koaxial zur Drehachse 31 des Steuerteiles 29 angeordnet ist. Der Übergang des Steigungsabschnittes 34 in den Steuerflächenabschnitt 35 ist dem Übergang des Abschnittes 20 in den Abschnitt 19 der Kulissenführung 6 zugeordnet. Bewegt sich der Bolzen 5 der Hülse 4 im Abschnitt 20 der Kulissenführung 6, wird die Hülse 4 und damit die Schaltwelle 3 nicht axial verschoben, da dieser Abschnitt 20 in Umfangsrichtung des Steuerteiles 7 verläuft. In diesem Bereich jedoch wird über den Steigungsabschnitt 34 eine Drehung der Schaltwelle 3 um ihre Achse erzeugt, um eine andere Gasse des Getriebes anzufahren. Der Steuerflächenabschnitt 35 erstreckt sich bis in Höhe des Endes 16 der Kulissenführung 6.

Der Steuerarm 12 der Hülse 11 liegt mit einem Gleitstück 36, das vorzugsweise kugelförmig ausgebildet ist, an der Steuerfläche 28 an. Damit der Steuerarm 12 in Anlage an der Steuerfläche 28 des Steuerteiles 29 gehalten wird, ist eine entsprechende Andruckvorrichtung 37 vorgesehen. Sie ist fest im Gehäuse 1 untergebracht und hat einen federbelasteten Kolben 38, der unter Federkraft am Steuerarm 12 anliegt und ihn in Richtung auf den Steuerteil 29 belastet. Dadurch ist gewährleistet, daß der Steuerarm 12 stets in Anlage an der Steuerfläche 28 gehalten wird.

Um die Achse 8 mit den Steuerteilen 7 und 29 um ihre Achse drehbar anzutreiben, ist ein Drehantrieb 39 vorgesehen, der vorteilhaft am Gehäuse 1 vorgesehen ist. Der Drehantrieb 39 hat ein Zylindergehäuse 40, in dem ein beidseitig beaufschlagbarer Kolben 41 untergebracht ist. Er sitzt auf einer Kolbenstange 42, die aus dem zylindergehäuse 40 ragt. Durch den Kolben 41 wird der Innenraum des Zylindergehäuses 40 in zwei Druckräume 43 und 44 unterteilt, die jeweils mit Hydraulikmedium beaufschlagbar sind. In der Leitungsverbindung von einem Tank 46 zum Zylindergehäuse 40 sitzt ein Proportionalmagnetventil 45. In der in Fig. 4 gezeichneten Stellung wird das Hydraulikmedium vom Tank 46 über die Leitung 47 in den Druckraum 44 gefördert, wodurch der Kolben 41 entsprechend beaufschlagt wird. Das im Druckraum 43 befindliche Hydraulikmedium wird über eine Leitung 48 zum Tank 46 zurückgeführt. Durch entsprechendes Umschalten des Ventiles 45 kann der Kolben 41 auch von der anderen Seite belastet werden, so daß die Kolbenstange 42 aus dem Zylindergehäuse 40 ausgefahren wird.

An der Stirnseite 49 der Kolbenstange 42 ist mit einem Halterungsteil 50 eine Zahnstange 51 befestigt. Die Zahnstange 51 liegt parallel zur Achse der Kolbenstange 42, während der Halterungsteil 50 rechtwinklig zur Zahnstange 51 verläuft. Vorteilhaft ist der Halterungsteil 50 an die Stirnseite 49 der Kolbenstange 42 angeschraubt, so daß die Zahnstange 51 bei Bedarf einfach ausgewechselt werden kann. Der Halterungsteil 50 ragt mit einem Arm 52 (Fig. 1) in das Gehäuse 1, in dem sich auch die Zahnstange 51 befindet. Sie wirkt mit einem Zahnrad 53 zusammen, das drehfest auf der Achse 8 sitzt. Die Achse der Zahnstange 51 liegt senkrecht zur Achse 8. Wird die Kolbenstange 42 durch Druckbeaufschlagung einoder ausgefahren, wird über die Zahnstange 51 und das Zahnrad 53 die Achse 8 in der gewünschten Richtung gedreht. Da auf der Achse 8 drehfest und axial unverschieblich die Steuerteile 7, 29 sitzen, werden sie in entsprechendem Maße gedreht. Auf die beschriebene Weise kann dann die Schaltwelle 3 zur Gassenwahl mittels des Steuerteiles 29 und der Hülse 11 um ihre Achse gedreht werden. Da sich während der Gassenwahl der Bolzen 5 der Hülse 4 in den in Umfangsrichtung des Steuerteiles 7 verlaufenden Abschnitten 20 oder 24 der Kulissenführung 6 befindet, wird die Schaltwelle 3 beim Drehen um ihre Achse nicht verschoben. Sobald die Gasse angefahren ist, wird durch entsprechend weiteres Drehen der Achse 5 die Schaltwelle 3 zum Einlegen des Ganges entsprechend axial verschoben. Dies wird dadurch erreicht, daß durch Drehen des Steuerteiles 7 der Bolzen 5 der Hülse 4 in einer der Steigungsabschnitte der Kulissenführung 6 des Steuerteiles gelangt, wodurch die Schaltwelle 3 in der entsprechenden Richtung verschoben wird.

Um die Schaltwelle 3 beim Drehen um ihre Achse gegen unbeabsichtigtes Verschieben zu sichern, ist eine Rasteinrichtung 54 (Fig. 1) vorgesehen. Die Schaltwelle 3 ist innerhalb des Getriebegehäuses 2 mit drei Raststellen 55 versehen, die jeweils durch Ringnuten gebildet sind. Sie gehen ineinander über und sind so an der Schaltwelle 3 vorgesehen, daß diametral einander gegenüberliegende, federbelastete Rastbolzen 56, 57 in eine der Ringnuten 55 eingreifen, wenn sich der Bolzen 5 der Hülse 4 in einem der steigungslosen Abschnitte 20, 24 der Kulissenführung 6 befindet. Die Länge dieser steigungslosen Abschnitte 20, 24 entspricht der in Umfangsrichtung gemessenen Länge der Steigungsabschnitte 32, 34 der Steuerfläche 28 des Steuerteiles 29 (Fig. 3). Die Rastbolzen 56, 57 sind in Aufnahmeräumen 58 und 59 untergebracht, die vorteilhaft einstückig mit dem Getriebegehäuse 2 ausgebildet sind. Auch die die Rastbolzen 56, 57 in Eingriffsstellung belastenden Druckfedern 60, 61 sind in den Aufnahmeräumen 58, 59 untergebracht.

Die Federkraft ist so eingestellt, daß die Schaltwelle 3 bei der Gassenwahl zuverlässig gegen Axialverschieben gesichert ist, daß die Schaltwelle 3 jedoch zum Gangeinlegen einfach in ihrer Achsrichtung verschoben werden kann.

Es ist möglich, den Boden der Kulissenführung 6 in unterschiedlichen Höhen entsprechend dem Verlauf der Steuerfläche 28 auszubilden. Dann ist das Steuerteil 29 nicht erforderlich, so daß sich eine konstruktiv einfache Ausbildung ergibt.

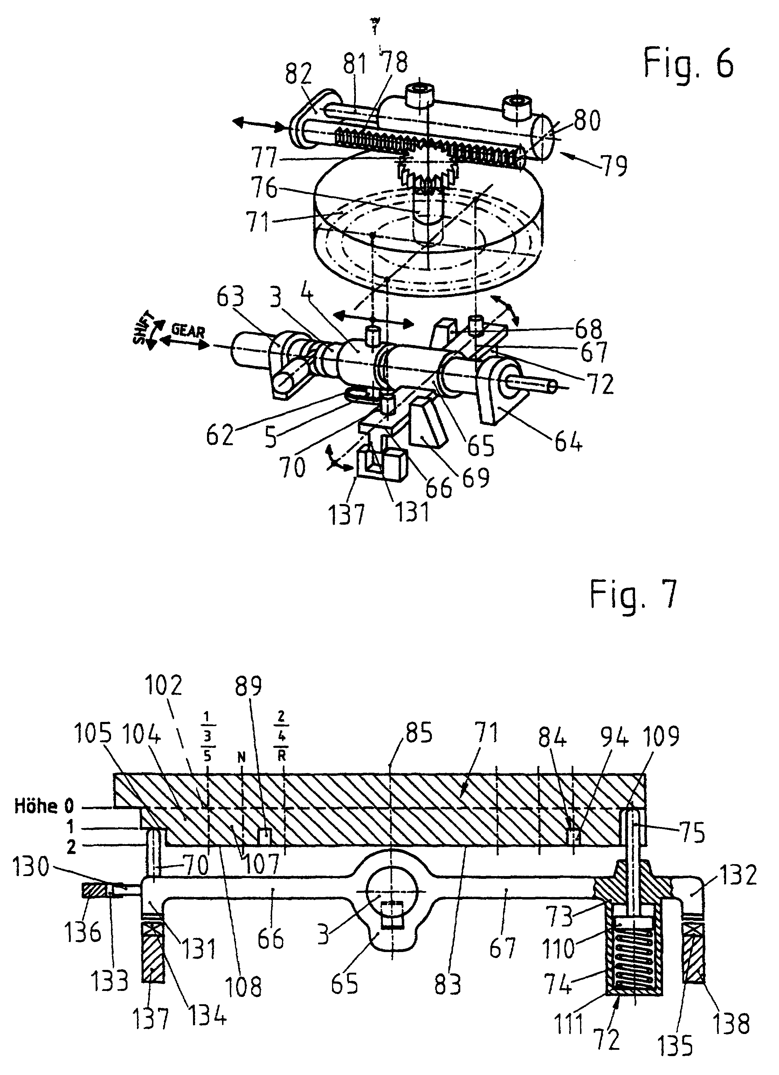

Bei der Ausführungsform nach den Fig. 6 bis 9 sitzt auf der Schaltwelle 3 des Getriebes axial unverschieblich die Hülse 4, welche die diametral einander gegenüberliegenden Bolzen 5 und 9 aufweist. Der Bolzen 5 ragt in einen getriebegehäuseseitigen Schlitz 62, dessen Breite dem Bolzendurchmesser entspricht. Innerhalb des in Achsrichtung der Schaltwelle 3 sich erstreckenden Schlitzes 62 kann der Bolzen 5 in noch zu beschreibender Weise verschoben werden. Der Schlitz 62 dient als Verdrehsicherung für die Hülse 4, relativ zu der die Schaltwelle 3 - wie beim vorigen Ausführungsbeispiel - drehbar ist. Die Schaltwelle 3 ist, wie dies in Fig. 6 beispielhaft dargestellt ist, in zwei Lagerstellen 63 und 64 drehbar gelagert.

Im Bereich zwischen der Hülse 4 und der Lagerstelle 64 sitzt auf der Schaltwelle 3 drehfest eine Hülse 65, von der diametral einander gegenüberliegende Arme 66 und 67 radial abstehen. Die Arme 66, 67 sind vorteilhaft einstückig mit der Hülse 65 ausgebildet, mit der sie eine Wippe bilden, die drehfest auf der Schaltwelle 3 sitzt. Sie kann relativ zur Hülse 65 in noch zu beschreibender Weise axial verschoben werden. Damit hierbei die Wippe 65 bis 67 nicht mitgenommen wird, greift an einander gegenüberliegenden Seiten des Armes 66 und 67 jeweils ein Anschlag 68 und 69 an, der starr in bezug auf das Getriebegehäuse angeordnet, vorzugsweise einstückig mit ihm ausgebildet ist.

Vom Arm 66 steht ein Stift 70 in Richtung auf eine Steuerscheibe 71 (Fig. 6) ab. Der Stift 70 ist fest mit dem Arm 66 verbunden und hat eine abgerundete Stirnseite. Der Arm 67 trägt nahe seinem freien Ende eine Rückstelleinrichtung 72, die dafür sorgt, daß der Stift 70 stets in Anlage an der Steuerscheibe 71 bleibt. Die Rückstelleinrichtung 72 hat eine hülsenförmige Aufnahme 73, in der eine Druckfeder 74 untergebracht ist, mit der ein Rückstellstift 75 belastet ist. Er steht in Richtung auf die Steuerscheibe 71 über den Arm 67 vor und liegt unter Federkraft an ihr an. Die Stirnseite des Rückstellstiftes 75 ist ebenfalls abgerundet.

Die Steuerscheibe 71 wird um ihre Achse drehbar angetrieben. Sie weist auf ihrer von der Wippe 65 bis 67 abgewandten Seite einen zentrischen Ansatz 76 auf (Fig. 6), auf dem ein Zahnrad 77 sitzt, dessen Achse mit der Achse der Steuerscheibe 71 zusammenfällt. Das Zahnrad 77 ist mit einer Zahnstange 78 in Eingriff, die mittels einer Stelleinrichtung 79 verschiebbar ist. Sie hat einen Stellzylinder 80, in dem ein (nicht dargestellter) beidseitig beaufschlagbarer Kolben gelagert ist. Er sitzt auf einer Kolbenstange 81, an deren außerhalb des Stellzylinders 80 liegenden Ende ein laschenförmiges Halterungsteil 82 befestigt ist. Es verbindet die Kolbenstange 81 mit der außerhalb des Stellzylinders 80 liegenden, parallel zu ihr verlaufenden Zahnstange 78. Durch Einund Ausfahren der Kolbenstange 81 wird die Zahnstange 78 verschoben und je nach Verschieberichtung die Steuerscheibe 71 in der gewünschten Richtung um ihre Achse gedreht.

An der der Wippe 65 bis 67 zugewandten Unterseite 83 (Fig. 7) ist eine als Nut ausgebildete Kulissenführung 84 vorgesehen, in welche der Bolzen 9 der Hülse 4 eingreift. Die Breite der Kulissenführung 84 entspricht dem Durchmesser des Bolzens 9. Durch Drehen der Steuerscheibe 71 um ihre Achse 85 wird infolge des Eingriffes des Bolzens 9 die Hülse 4 und damit die Schaltwelle 3 in ihrer Achsrichtung verschoben. Über den Bolzen 5 ist die Hülse 4 gegen Verdrehen um ihre Achse einwandfrei gesichert. Durch Verschieben der Schaltwelle 3 werden die jeweiligen Gänge des Getriebes eingelegt.

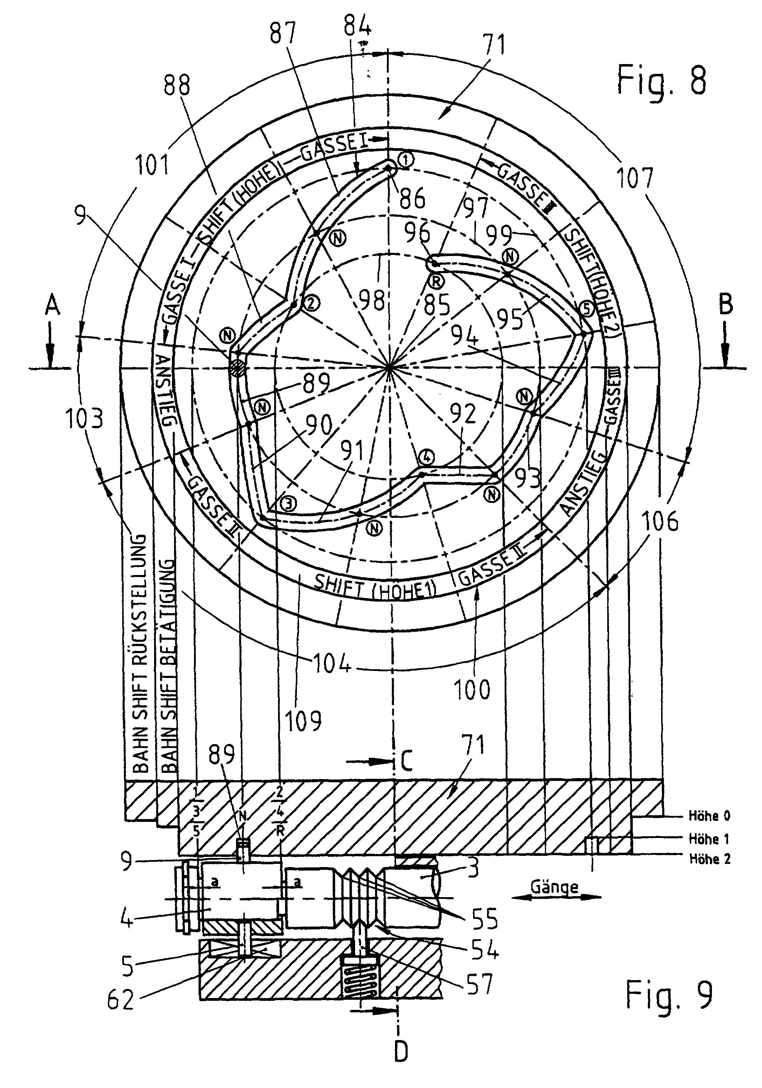

Fig. 8 zeigt den Verlauf der Kulissenführung 84. Um ein Verschieben der Schaltwelle 3 zu erreichen und die verschiedenen Gänge einzulegen, hat die Kulissenführung 84 unterschiedliche Steigungsabschnitte. Ist der erste Gang eingelegt, dann befindet sich der Bolzen 9 der Hülse 4 am Ende 86 der Kulissenführung 84 (Fig. 8). Um aus dem ersten in den zweiten Gang schalten zu können, ist ein Führungsabschnitt 87 vorgesehen, der sich vom Ende 86 aus schräg nach innen erstreckt, also unter einem Winkel zur Umfangsrichtung der Steuerscheibe 71 verläuft. Da dieser Abschnitt 87 sich nicht in Umfangsrichtung erstreckt, wird beim Drehen der Steuerscheibe 71 der Bolzen 9 und damit die Hülse 4 in Fig. 6 nach rechts verschoben.

An den Abschnitt 87 schließt der Abschnitt 88 an, der entgegengesetzte Steigung hat und schräg radial nach außen verläuft. Befindet sich der Bolzen 9 der Hülse 4 in diesem Abschnitt, wird über die Hülse 4 die Schaltwelle 3 in Fig. 6 nach links in die Neutralstellung N verschoben. Der Abschnitt 88 schließt dann an einen Abschnitt 89 an, der sich in Umfangsrichtung der Steuerscheibe 71 erstreckt. Beim Drehen der Steuerscheibe 71 wird dadurch die Hülse 4 und damit die Schaltwelle 3 nicht verschoben, solange sich der Bolzen 9 in diesem Abschnitt 89 befindet.

An den in Umfangsrichtung 89 verlaufenden Abschnitt schließt ein schräg nach außen ansteigender Abschnitt 90 an. In ihm wird der Bolzen 9 bewegt, wenn der dritte Gang eingelegt werden soll. In diesem Falle wird beim Drehen der Steuerscheibe 71 die Schaltwelle 3 in Fig. 6 nach links verschoben.

An den Abschnitt 90 schließt wiederum ein Abschnitt 91 an, der schräg nach innen gerichtet ist und in dem sich der Bolzen 9 beim Schalten vom dritten in den vierten Gang bewegt. Die Schaltwelle 3 wird in diesem Falle in Fig. 6 nach rechts verschoben, wenn der Bolzen 9 sich in diesem Abschnitt 91 bewegt.

Um aus dem vierten Gang wieder in die Neutralstellung N zurückschalten zu können, ist der Abschnitt 92 vorgesehen, der radial schräg nach außen verläuft und in den Abschnitt 93 übergeht. Er verläuft wie der Abschnitt 89 wieder in Umfangsrichtung der Steuerscheibe 71. Beim Zurückschalten vom vierten Gang in die Neutralstellung wird über den Bolzen 9 und die Hülse 4 die Schaltwelle 3 in Fig. 6 wieder nach links verschoben. Bewegt sich der Bolzen 9 im Abschnitt 93 der Kulissenführung 84, wird die Schaltwelle 3 axial nicht verschoben, da der Abschnitt 93 in Umfangsrichtung der Steuerscheibe 71 verläuft.

Um aus der Neutralstellung N in den fünften Gang schalten zu können, schließt an den Abschnitt 93 der schräg nach außen sich erstreckende Abschnitt 94 an. Wird die Steuerscheibe 71 entsprechend gedreht, wird die Schaltwelle 3 in Fig. 6 wieder nach links verschoben.

Um aus dem fünften Gang in den Rückwärtsgang R schalten zu können, geht der Abschnitt 94 in einen Abschnitt 95 über, der radial schräg nach innen sich erstreckt. Ist der Rückwärtsgang R eingelegt, liegt der Bolzen 9 an der Endwand 96 der Kulissenführung 84 an.

Wie Fig. 8 zeigt, liegen die Führungsabschnitte 89 und 93 der Kulissenführung 84 auf einem Kreis 97 um die Drehachse 85 der Steuerscheibe 71. Sind der zweite oder vierte oder der Rückwärtsgang R eingelegt, dann liegt der Bolzen 9 jeweils auf einem Kreis 98 um die Drehachse 85 der Steuerscheibe 71. Dieser Kreis 98 hat kleineren Durchmesser als der Kreis 97. Bei eingelegtem erstem, drittem und fünftem Gang liegt der Bolzen 9 auf einem Kreis 99 um die Drehachse 85 der Steuerscheibe 71. Der Kreis 99 hat größeren Durchmesser als der Kreis 97.

Durch entsprechendes Verschieben der Zahnstange 78 mittels des doppelt beaufschlagbaren Kolbens der Kolbenstange 81 wird die Steuerscheibe 71 in der gewünschten Richtung gedreht, um die Schaltwelle 3 in der jeweiligen Richtung axial zu verschieben. Bei dieser axialen Verschiebebewegung bewegt sich die Schaltwelle 3 relativ zur Hülse 65. Da die Arme 66, 67 an den Anschlägen 68, 69 anliegen, wird eine unbeabsichtigte Mitnahme der Hülse 65 zuverlässig verhindert.

Um den jeweils gewünschten Gang einlegen zu können, muß zuvor die erforderliche Gasse des Getriebes angefahren werden. Hierzu dient die Wippe 65 bis 67, die um die Achse der Schaltwelle 3 geschwenkt wird, wodurch die Schaltwelle in der gewünschten Richtung um ihre Achse gedreht wird. Um diese Drehung der Schaltwelle 3 zu erreichen, ist die Steuerscheibe 71 an ihrer Unterseite 83 mit einer Steuerbahn 100 versehen, die koaxial zur Drehachse 85 der Steuerscheibe 71 verläuft und die Kulissenführung 84 mit Abstand umgibt (Fig. 8). Die Steuerbahn 100 hat einen Bahnabschnitt 101, der sich nahezu über 90° erstreckt und dessen Unterseite 102 gegenüber der Unterseite 83 der Steuerscheibe 71 axial zurückgesetzt ist (Fig. 7). Diese Unterseite 102 verläuft über ihre Länge parallel zur Scheibenunterseite 83. In Fig. 7 ist dieses Niveau der Unterseite mit "0" bezeichnet. Solange sich der Stift 70 auf dieser Unterseite 102 des Bahnabschnittes 101 bewegt, wird die Wippe 65 bis 67 nicht um die Achse der Schaltwelle 3 geschwenkt. Der Bahnabschnitt 101 ist den Führungsabschnitten 87 und 88 der Kulissenführung 84 zugeordnet. In diesen beiden Führungsabschnitten bewegt sich der Bolzen 9 der Hülse 4, wenn vom ersten in den zweiten Gang und umgekehrt geschaltet wird. Während dieses Schaltvorganges darf die Schaltwelle 3 nicht um ihre Achse gedreht werden. Dies wird durch die beschriebene parallele Anordnung der Unterseite 102 zur Scheibenunterseite 83 erreicht.

Der Bahnabschnitt 101 geht in einen Steigungsabschnitt 103 über, der dem Führungsabschnitt 89 der Kulissenführung 84 zugeordnet ist. Der Steigungsabschnitt 103 und der Führungsabschnitt 89 erstrecken sich über den gleichen Winkelabstand. Da die Schaltwelle 3 nicht axial verschoben wird, wenn sich der Bolzen 9 im Führungsabschnitt 89 der Kulissenführung 84 bewegt, kann in diesem Bereich die Schaltwelle 3 um ihre Achse gedreht werden. Der Stift 70 gleitet auf dem Steigungsabschnitt 103, wodurch die Wippe 65 bis 67 um die Achse der Schaltwelle 3 geschwenkt wird. Da die Hülse 65 drehfest auf der Schaltwelle 3 sitzt, wird sie entsprechend gedreht. Auf diese Weise kann die nächste Gasse angefahren werden. Der Bahnabschnitt 101 ist in dem in Fig. 8 dargestellten Ausführungsbeispiel der Gasse I zugeordnet. Über den Steigungsabschnitt 103 gelangt der Stift 70 auf einen weiteren Bahnabschnitt 104, welcher der Gasse II zugeordnet ist. Die Unterseite 105 (Fig. 7) des Bahnabschnittes 104 verläuft parallel zur Unterseite 102 des Bahnabschnittes 101 sowie zur Scheibenunterseite 83. Die Unterseite 105 hat kleineren axialen Abstand von der Scheibenunterseite 83 als die Unterseite 102 des Bahnabschnittes 101. In Fig. 7 liegt der Stift 70 des Arms 66 an der Unterseite 105 an. Bewegt sich der Stift 70 beim Drehen der Steuerscheibe 71 längs der Unterseite 105, wird die Wippe 65 bis 67 nicht geschwenkt und damit die Schaltwelle 3 auch nicht um ihre Achse gedreht. In diesem Drehwinkelbereich kann sich der Bolzen 9 der Hülse 4 in den Führungsabschnitten 90 bis 92 der Kulissenführung 84 bewegen, um in den dritten und den vierten Gang zu gelangen. Die Schaltwelle 3 wird hierbei in der beschriebenen Weise axial verschoben.

Dem in Umfangsrichtung der Steuerscheibe 71 verlaufenden Führungsabschnitt 93 der Kulissenführung 84 ist wiederum ein Steigungsabschnitt 106 der Steuerbahn 100 zugeordnet, der gleiche Winkellänge wie der Führungsabschnitt 93 hat. Bewegt sich der Stift 70 auf diesem Steigungsabschnitt 106, gelangt er vom Bahnabschnitt 104 auf einen Bahnabschnitt 107, dessen Unterseite 108 in der Ebene der Scheibenunterseite 83 liegt. Das Höhenniveau des Bahnabschnittes 105 ist in Fig. 7 mit "1" und des Bahnabschnittes 108 mit "2" bezeichnet. Über den Steigungsabschnitt 107 wird der Stift 70 vom Höhenniveau "1" der Unterseite 105 des Bahnabschnittes 104 auf das Höhenniveau "2" der Unterseite 108 des Bahnabschnittes 107 geführt. In der Darstellung gemäß Fig. 7 wird die Wippe 65 bis 67 entgegen dem Uhrzeigersinn verschwenkt, wenn der Stift 70 über den Steigungsabschnitt 106 auf den Bahnabschnitt 107 gelangt. Die Schaltwelle 3 wird ebenfalls entgegen dem Uhrzeigersinn um ihre Achse gedreht. Auf diese Weise wird die Gasse III des Getriebes angefahren. Aus dieser Gasse III können der fünfte Gang und der Rückwärtsgang R eingelegt werden.

Wie beim vorigen Ausführungsbeispiel sind bei der Steuerscheibe 71 den verschiedenen Abschnitten der Kulissenführung 84 entsprechende Bahnabschnitte der Steuerbahn 100 zugeordnet, so daß die Schaltwelle 3 entweder um ihre Achse gedreht oder in ihrer Achsrichtung verschoben wird.

Die Steuerscheibe 71 ist ein flach bauendes Teil, so daß auch die Stelleinrichtung insgesamt nur sehr geringe Bauhöhe hat.

An der Unterseite 83 der Steuerscheibe 71 ist eine axial zurückgesetzte, vorzugsweise auf dem Höhenniveau "0" liegende Ringfläche 109 vorgesehen, die ebenfalls koaxial zur Drehachse 85 der Steuerscheibe 71 an deren Umfang liegt. Die Ringfläche 109 liegt parallel zur Scheibenunterseite 83 und dient als Anlagefläche für den Rückstellstift 75. Beim Drehen der Steuerscheibe 71 liegt der Rückstellstift 75 unter der Kraft der Druckfeder 74 ständig an der Ringfläche 109 an. Der Rückstellstift 75 sorgt dafür, daß die Wippe 65 bis 67 im Uhrzeigersinn geschwenkt wird, wenn der Stift 70 von einem höheren Niveau der Steuerbahn 100 auf ein niedrigeres Niveau gelangen soll. Da sich die Druckfeder 74 innerhalb der Aufnahme 73 an einem Bund 110 des Rückstellstiftes 75 abstützt, der seinerseits an der Ringfläche 109 anliegt, drückt die Druckfeder 74 auf den Boden 111 der Aufnahme 73, wodurch die gesamte Wippe 65 bis 67 im Uhrzeigersinn belastet wird. Bewegt sich der Stift 70 auf einem der beiden Steigungsabschnitte 103, 106 der Steuerbahn 100 in Richtung auf ein niedrigeres Höhenniveau, wird dementsprechend die Wippe 65 bis 67 im Uhrzeigersinn geschwenkt, wobei sich der Arm 67 relativ zum Rückstellstift 75 bewegt. Auf diese Weise ist sichergestellt, daß die Wippe 65 bis 67 mit dem Stift 70 stets am jeweiligen Steigungs- bzw. Bahnabschnitt der Steuerbahn 100 anliegt.

Wie Fig. 9 zeigt, hat die Schaltwelle 3 wiederum die Rasteinrichtung 54 mit den Raststellen 55, in die im Gegensatz zur vorigen Ausführungsform nur ein Rastbolzen 57 eingreift. Durch ihn ist sichergestellt, daß die Schaltwelle 3 beim Drehen um ihre Achse nicht axial verschoben wird. Wie beim vorigen Ausführungsbeispiel entsprechen den drei Raststellen 55 in Form der Ringnuten die drei Gassen I bis III des Getriebes.

Um die jeweilige Gasse des Getriebes anzufahren, ist nur eine geringe Kraft erforderlich. Aus diesem Grunde ist zum Verschwenken des Steuerarmes 12 (Fig. 1 bis 5) bzw. der Wippe 65 bis 67 (Fig. 6 bis 9) auch nur eine entsprechend geringe Kraft notwendig. Mit den Stellzylindern 39, 79 kann die erforderliche hohe Kraft aufgebracht werden, wenn die unterschiedlichen Gänge eingelegt werden sollen. Dabei erfolgt innerhalb des Getriebes die Synchronisierung, wobei ein geregelter Kraftanstieg bis auf eine maximale Kraft erfolgt, bis die Klauen des Synchronisiergetriebes in bekannter Weise ineinandergreifen. Mit den Stellzylindern kann dieser geregelte Kraftanstieg einfach und zuverlässig durchgeführt werden.

Wie Fig. 7 zeigt, sind die Arme 66, 67 an ihren freien Enden mit Formschlußelementen 130 bis 132 versehen, die in entsprechende Formschlußöffnungen 133 bis 135 von Schaltstangen 136 bis 138 des Getriebes eingreifen können. Diese Schaltstangen 136 bis 138 sind in bekannter Weise über Schaltgabeln mit den entsprechenden Getriebeteilen verbunden.

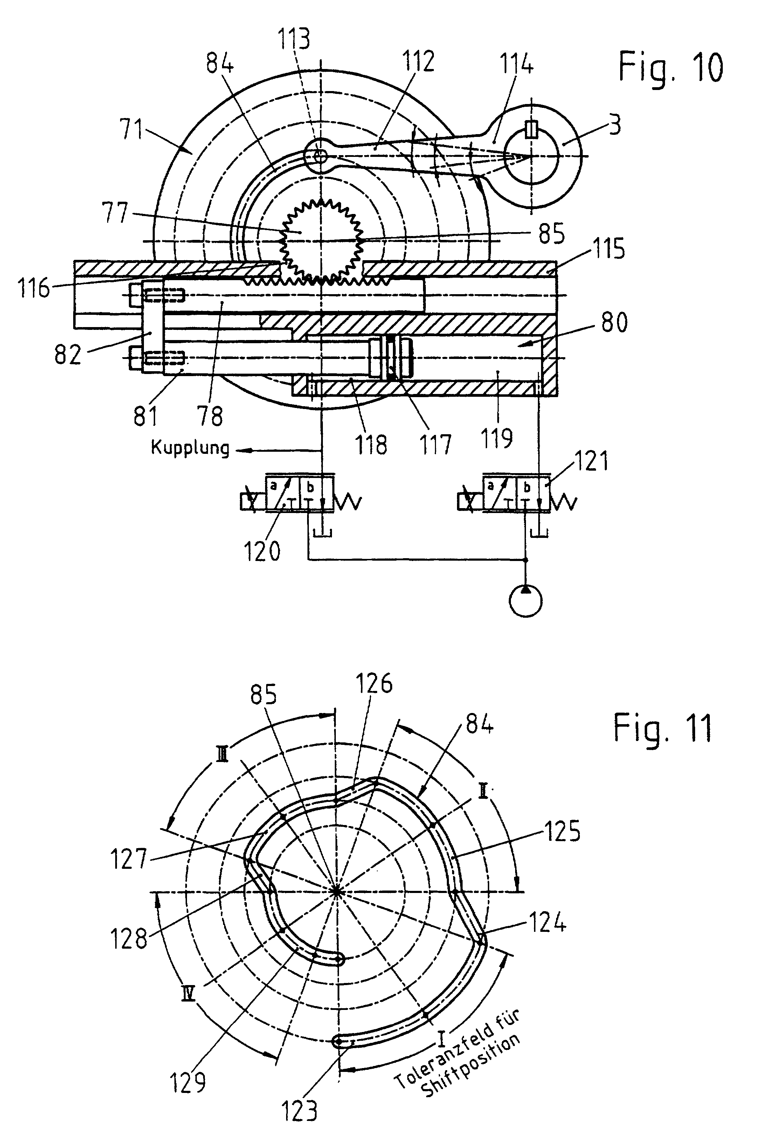

Bei der Ausführungsform nach den Fig. 10 und 11 hat die Stelleinrichtung die Steuerscheibe 71 mit der Kulissenführung 84. In sie greift ein am freien Ende eines Steuerarmes 112 vorgesehenes Führungselement 113 ein, das wie der Bolzen 9 der Ausführungsform nach den Fig. 1 bis 5 einen der Breite der Kulissenführung 84 entsprechenden Durchmesser hat. Der Steuerarm 112 steht radial von einer Hülse 114 ab, die drehfest auf der Schaltwelle 3 des Getriebes sitzt. Die Achse der Schaltwelle 3 liegt parallel zur Drehachse 85 der Steuerscheibe 71. Wie beim vorigen Ausführungsbeispiel ist die Steuerscheibe 71 drehfest mit dem Zahnrad 77 verbunden, das mit der Zahnstange 78 in Eingriff ist. Sie ist in einem Gehäuse 115 geführt, das im Bereich des Zahnrades 77 eine Öffnung 116 aufweist, so daß das Zahnrad 77 in die Zahnstange 78 eingreifen kann.

Am einen Ende der Zahnstange 78 ist das quer abstehende laschenförmige Halterungsteil 82 befestigt, das am freien Ende der Kolbenstange 81 befestigt ist, die aus dem Stellzylinder 80 ragt. Sein Gehäuse ist vorzugsweise einstückig mit dem die Zahnstange 78 aufnehmendem Gehäuse 115 ausgebildet. Im Stellzylinder 80 sitzt auf dem freien Ende der Kolbenstange 81 ein Kolben 117. Er trennt zwei Druckräume 118 und 119 im Stellzylinder 80 voneinander. Die dem Druckraum 119 zugewandte Stirnfläche des Kolbens 117, die mit Hydraulikmedium beaufschlagbar ist, ist größer, im Ausführungsbeispiel doppelt so groß wie die gegenüberliegende Stirnfläche des Kolbens 117, welche den Druckraum 118 an einer Seite begrenzt. An den Druckraum 118 ist ein Schaltventil 120 und an den Druckraum 119 ein Schaltventil 121 angeschlossen. Eine Pumpe 122, an welche die beiden Schaltventile angeschlossen sind, versorgt die Druckkammern 118, 119 mit Hydraulikmedium. Durch Ein- und Ausfahren der Kolbenstange 71 wird über das Halterungsteil 82 die Zahnstange 78 mitgenommen, die über das Zahnrad 77 die Steuerscheibe 71 um die Achse 85 in der erforderlichen Richtung dreht.

Im Gegensatz zum vorigen Ausführungsbeispiel ist die Kulissenführung 84 so ausgelegt, daß mit ihr vier Gassen des Getriebes angefahren werden können. Die Kulissenführung 84 hat, wie Fig. 11 zeigt, einen auf einem Kreisbogen um die Drehachse 85 der Steuerscheibe liegenden Abschnitt 123. Solange sich das Führungselement 113 des Steuerarmes 112 innerhalb dieses Abschnittes 123 befindet, wird die Schaltwelle 3 nicht um ihre Achse gedreht, da dieser Abschnitt 123 koaxial zur Drehachse 85 der Steuerscheibe 71 liegt.

Der Abschnitt 123 geht in einen schräg nach innen gerichteten Steigungsabschnitt 124 über. Da er unter einem Winkel zur Umfangsrichtung der Steuerscheibe 71 liegt, wird der Steuerarm 112 in der entsprechenden Richtung geschwenkt, sobald sich sein Führungselement 113 im Steigungsabschnitt 124 befindet. Dabei wird die Schaltwelle 3 in der gewünschten Richtung gedreht.

Der Steigungsabschnitt 124 geht in einen wiederum in Umfangsrichtung der Steuerscheibe 71 sich erstreckenden Abschnitt 125 über, der im Vergleich zum Abschnitt 123 auf einem kleineren Radius liegt. Darum wird der Steuerarm 112 nicht geschwenkt und darum auch die Schaltwelle 3 nicht um ihre Achse gedreht, wenn sich das Führungselement 113 in diesem Abschnitt 125 bewegt.

Der Abschnitt 125 geht über einen schräg nach innen gerichteten Steigungsabschnitt 126 in einen ebenfalls in Umfangsrichtung der Steuerscheibe 71 sich erstreckenden Abschnitt 127 über. Dieser Abschnitt 127 liegt auf einem kleineren Radius um die Drehachse 85 als der Abschnitt 125. Solange sich das Führungselement 113 des Steuerarmes 112 in diesem Abschnitt 127 bewegt, wird darum die Schaltwelle 3 nicht um ihre Achse gedreht.

Der Abschnitt 127 geht wiederum über einen schräg nach innen gerichteten Steigungsabschnitt 128 in einen in Umfangsrichtung der Steuerscheibe sich erstreckenden Abschnitt 129 über, der wiederum auf einem kleineren Radius um die Drehachse 85 der Steuerscheibe 71 liegt als der Abschnitt 127. Befindet sich das Führungselement 113 in diesem Abschnitt 129, wird die Schaltwelle 3 wiederum nicht um ihre Achse gedreht.

Der Abschnitt 123 ist der Gasse I, der Abschnitt 125 der Gasse II, der Abschnitt 127 der Gasse III und der Abschnitt 129 der Gasse IV zugeordnet. Über die jeweiligen Steigungsabschnitte 124, 126 und 128 kann die jeweilige Gasse des Getriebes angefahren werden. Die vier Gassen sind bei einem Sechsganggetriebe vorgesehen.

Um den jeweiligen Gang des Getriebes einzulegen, wird zunächst die Kolbenstange 81 ein- bzw. ausgefahren und damit die Zahnstange 78 verschoben. Über das Zahnrad 77 wird die Steuerscheibe 71 in der erforderlichen Richtung gedreht. Befindet sich beispielsweise das Führungselement 113 des Steuerarmes 112 in dem der Gasse I zugeordneten Abschnitt 123 der Kulissenführung 84, wird die Steuerscheibe 71 um ihre Achse 85 so gedreht, daß das Führungselement 113 in den Steigungsabschnitt 124 gelangt. Da er unter einem Winkel zur Umfangsrichtung der Steuerscheibe 71 liegt, wird der Steuerarm 112 geschwenkt, wodurch die Schaltwelle 3 um ihre Achse gedreht wird. Sobald das Führungselement 113 in den Abschnitt 125 der Kulissenführung 84 gelangt, ist die Gasse II angefahren. Nunmehr kann in noch zu beschreibender Weise der gewünschte Gang eingelegt werden.

Auf die beschriebene Weise werden über die jeweiligen Steigungsabschnitte 124, 126, 128 die gewünschten Gassen I bis IV angefahren. Die Schaltwelle 3 wird hierbei über den Steuerarm 112 in die gewünschte Lage um ihre Achse gedreht.

Um die Kolbenstange 81 aus dem Stellzylinder 80 auszufahren, wird das Schaltventil 121 in die Stellung a geschaltet, so daß Hydraulikmedium von der Pumpe 122 in die Druckkammer 119 gelangen kann. Das Schaltventil 120 wird ebenfalls in Stellung a geschaltet. Da die der Druckkammer 119 zugewandte Stirnseite des Kolbens 117 eine größere Fläche hat als die dem Druckraum 118 zugewandte Ringfläche des Kolbens, wird er in Fig. 10 nach links verschoben und damit die Kolbenstange 81 ausgefahren. Das im Druckraum 118 befindliche Hydraulikmedium wird über das Schaltventil 120 dem Schaltventil 121 wieder zugeführt.

Soll die Kolbenstange 81 in den Stellzylinder 80 zurückgeschoben werden, wird das Schaltventil 121 umgeschaltet, so daß das unter Druck stehende Hydraulikmedium über das Schaltventil 120 in den Druckraum 118 strömt und dadurch die Kolbenstange 81 einfährt.

Im Gegensatz zur vorigen Ausführungsform ist der Kulissenführung 84 der Steuerscheibe 71 keine Steuerbahn zugeordnet. Vielmehr wird die Schaltwelle 3 nach Anfahren der jeweiligen Gasse mittels einer Folgeschaltung axial verschoben, um den gewünschten Gang einzulegen. Hierfür kann eine zusätzliche Kolben-Zylinder-Einheit vorgesehen werden, die parallel oder fluchtend zur Schaltwelle 3 angeordnet sein kann und mit der die Schaltwelle 3 antriebsverbunden ist.

Sobald sich das Führungselement 113 des Steuerarmes 112 in einem der der jeweiligen Gasse I bis IV zugeordneten Abschnitte 123, 125, 127, 129 befindet, ist die Drehlage der Schaltwelle 3 festgelegt. Da diese Abschnitte jeweils konzentrisch zur Drehachse 85 der Steuerscheibe 71 verlaufen, ist es für die Drehlage der Schaltwelle 3 nicht notwendig, daß das Führungselement 113 innerhalb des jeweiligen Abschnittes 123, 125, 127, 129 eine bestimmte Position einnimmt. Das Führungselement 113 des Steuerarmes 112 kann am Anfang, in der Mitte oder am Ende des jeweiligen Abschnittes liegen, ohne daß dies einen Einfluß auf die Drehlage der Schaltwelle 3 hat. Die jeweilige Winkellänge der Abschnitte 123, 125, 127, 129 der Kulissenführung 84 bildet somit ein Toleranzfeld für die Shiftposition. Aus diesem Grunde können für die Shiftbewegung, d.h. für das Drehen der Schaltwelle 3 um ihre Achse, einfache und preisgünstige Schaltventile 120, 121 verwendet werden. Da außerdem lediglich die Kulissenführung 84, nicht jedoch eine zusätzliche Steuerbahn vorgesehen ist, kann die Stelleinrichtung auch konstruktiv sehr einfach ausgebildet sein. Nachdem die jeweilige Gasse I bis IV angefahren ist, kann der entsprechende Antrieb zum Verschieben der Schaltwelle 3 betätigt werden.

In Fig. 10 sind durch strichpunktierte Linien die verschiedenen Lagen des Steuerarmes 112 angegeben, wenn sich dessen Führungselement 113 in den vier Abschnitten 123, 125, 127, 129 der Kulissenführung 84 befindet.

## Patentansprüche

1. Stelleinrichtung zur Automatisierung von Handschaltgetrieben von Fahrzeugen, mit der eine Schaltwelle (3) des Getriebes über einen Antrieb (39, 79) zur Gassenwahl und zum Gangeinlegen um ihre Achse drehbar sowie in ihrer Achsrichtung verschiebbar ist,
**dadurch gekennzeichnet, daß** die Dreh- und die Verschiebbarkeit der Schaltwelle (3) vom Antrieb (39, 79) abgeleitet ist, mit dem ein Steuerelement (7, 29; 71) drehbar ist, das eine Kulissenführung (6, 84) zum Verschieben und eine Steuerbahn (28, 100) zum Drehen der Schaltwelle (3) aufweist.

2. Stelleinrichtung zur Automatisierung von Handschaltgetrieben von Fahrzeugen, mit der eine Schallwelle (3) des Getriebes über einen Antrieb (80, 81) zur Gassenwahl um ihre Achse drehbar und zum Gangeinlegen mit einem weiteren Antrieb in ihrer Achsrichtung verschiebbar ist, wobei der Antrieb (80, 81) zum Drehen der Schaltwelle (3) ein Steuerelement (71) antreibt, das eine Kulissenführung (84) zum Drehen der Schaltwelle (3) aufweist, die mit einem Steuerarm (112) drehfest verbunden ist, der mit einem Führungselement (113) in die Kulissenführung (84) eingreift,
**dadurch gekennzeichnet, daß** das Steuerelement (71) drehbar angetrieben und über ein Zwischengetriebe (77, 78) mit dem Antrieb (80, 81) antriebsverbunden ist.
(Hieran schließen die ursprünglichen Ansprüche 3 bis 28 unverändert an.)

3. Einrichtung nach Anspruch 1 oder 2,
**dadurch gekennzeichnet, daß** der Antrieb (39; 79; 80, 81) eine Kolben-Zylinder-Einheit ist, die vorzugsweise hydraulisch betätigbar ist, und daß vorzugsweise der Antrieb (39; 79; 80, 81) eine Zahnstange (51, 78) aufweist, die mit einem drehfest mit dem Steuerelement (7, 29; 71) verbundenen Zahnrad (53, 77) kämmt.

4. Einrichtung nach einem der Ansprüche 1 bis 3,
**dadurch gekennzeichnet, daß** die Achse (8, 85) des Steuerelementes (7, 29, 71) parallel zur Drehachse der Schaltwelle (3) liegt.

5. Einrichtung nach einem der Ansprüche 1 bis 3,
**dadurch gekennzeichnet, daß** die Achse (85) des Steuerelementes (71) senkrecht zur Achse der Schaltwelle (3) liegt.

6. Einrichtung nach einem der Ansprüche 1 bis 5,
**dadurch gekennzeichnet, daß** die Kulissenführung (6, 84) eine Vertiefung im Steuerelement (7, 29; 71) ist.

7. Einrichtung nach einem der Ansprüche 1 und 3 bis 6,
**dadurch gekennzeichnet, daß** die Kulissenführung (6) am Umfang des Steuerteiles (7, 29) vorgesehen ist, das vorzugsweise hülsenförmig ausgebildet ist.

8. Einrichtung nach einem der Ansprüche 1 bis 6,
**dadurch gekennzeichnet, daß** das Steuerteil (71) als Scheibe ausgebildet ist, und daß vorzugsweise die Kulissenführung (84) in einer Unterseite (83) des Steuerteiles (71) vorgesehen ist.

9. Einrichtung nach einem der Ansprüche 1 und 3 bis 8,
**dadurch gekennzeichnet, daß** die Kulissenführung (6, 84) in Umfangsrichtung des Steuerteiles (7, 29; 71) ansteigende und abfallende Führungsabschnitte (18, 19, 21 bis 23, 25, 26; 87, 88, 90 bis 92, 94, 95) aufweist, die den einzulegenden Gängen des Getriebes zugeordnet sind.

10. Einrichtung nach einem der Ansprüche 2 bis 8,
**dadurch gekennzeichnet, daß** die Kulissenführung (84) in Umfangsrichtung des Steuerteiles (71) ansteigende und abfallende Führungsabschnitte (124, 126, 128) aufweist, die zum Drehen der Schaltwelle (3) um ihre Achse vorgesehen sind.

11. Einrichtung nach einem der Ansprüche 1 und 3 bis 10,
**dadurch gekennzeichnet, daß** die Kulissenführung (6, 84) in Umfangsrichtung des Steuerteiles (7, 29; 71) sich erstreckende Führungsabschnitte (20, 24; 89, 93) aufweist, die der Neutralstellung des Getriebes zugeordnet sind.

12. Einrichtung nach einem der Ansprüche 2 bis 11,
**dadurch gekennzeichnet, daß** die Kulissenführung (84) in Umfangsrichtung des Steuerteiles (71) verlaufende Führungsabschnitte (123, 125, 127, 129) aufweist, die jeweils einer Gasse (I bis IV) des Getriebes zugeordnet sind.

13. Einrichtung nach einem der Ansprüche 1 und 3 bis 12,
**dadurch gekennzeichnet, daß** die Steuerbahn (28, 100) in Umfangsrichtung des Steuerteiles (7, 29; 71) verlaufende Bahnabschnitte (30, 33, 35; 101, 104, 107) aufweist, denen jeweils eine Gasse des Getriebes zugeordnet ist.

14. Einrichtung nach Anspruch 13,
**dadurch gekennzeichnet, daß** die Bahnabschnitte (30, 33, 35) unterschiedlichen Abstand von der Drehachse des Steuerteiles (7, 29) haben und vorteilhaft am Umfang des Steuerteiles (7, 29) angeordnet und durch Steigungsabschnitte (32, 34) miteinander verbunden sind.

15. Einrichtung nach Anspruch 13,
**dadurch gekennzeichnet, daß** die Bahnabschnitte (101, 104, 107) unterschiedlichen Abstand von der der Schaltwelle (3) zugewandten Unterseite (83) des Steuerteiles (71) haben, und daß vorzugsweise die Bahnabschnitte (101, 104, 107) auf einem gemeinsamen Kreis um die Drehachse (85) des Steuerteiles (71) liegen und durch Steigungsabschnitte (103, 106) ineinander übergehen.

16. Einrichtung nach Anspruch 15,
**dadurch gekennzeichnet, daß** die Stirnseiten (102, 105, 108) der Bahnabschnitte (101, 104, 107) parallel zueinander und zur Unterseite (83) des Steuerteiles (71) liegen.

17. Einrichtung nach einem der Ansprüche 14 bis 16,
**dadurch gekennzeichnet, daß** den Steigungsabschnitten (32, 34; 103, 106) der Steuerbahn (28, 100) die in Umfangsrichtung sich erstreckenden Führungsabschnitte (20, 24; 89, 93) der Kulissenführung (6, 84) zugeordnet sind.

18. Einrichtung nach einem der Ansprüche 1 und 3 bis 17,
**dadurch gekennzeichnet, daß** auf der Schaltwelle (3) axial fest ein Antriebsteil (4) sitzt, das mit einem Führungselement (5, 9) in die Kulissenführung (6, 84) eingreift und vorzugsweise gegen Drehen gesichert ist.

19. Einrichtung nach einem der Ansprüche 1 und 3 bis 18,
**dadurch gekennzeichnet, daß** auf der Schaltwelle (3) drehfest ein Drehteil (11, 65) sitzt, das mit einem Abtastelement (12, 70) an der Steuerbahn (28, 100) anliegt.

20. Einrichtung nach Anspruch 19,
**dadurch gekennzeichnet, daß** die Schaltwelle (3) mit dem Drehteil (11) fest verbunden ist.

21. Einrichtung nach Anspruch 19,
**dadurch gekennzeichnet, daß** die Schaltwelle (3) relativ zum Drehteil (65) verschiebbar ist.

22. Einrichtung nach einem der Ansprüuche 19 bis 21,
**dadurch gekennzeichnet, daß** das Abtastelement (12, 70) unter Kraft, vorzugsweise unter Federkraft, an der Steuerbahn (28, 100) anliegt.

23. Einrichtung nach einem der Ansprüche 19 bis 22,
**dadurch gekennzeichnet, daß** das Drehteil (11, 65) eine Hülse ist.

24. Einrichtung nach einem der Ansprüche 19 bis 23,
**dadurch gekennzeichnet, daß** das Drehteil (65) wippenartig ausgebildet ist, und daß vorteilhaft das Abtastelement (70) an einem Arm (66) des Drehteiles (65) vorgesehen ist, und daß vorzugsweise am anderen Arm (67) ein unter Federkraft am Steuerelement (71) anliegendes Rückführelement (75) vorgesehen ist.

25. Einrichtung nach einem der Ansprüche 19 bis 23,
**dadurch gekennzeichnet, daß** das Abtastelement (12) ein quer vom Drehteil (11) abstehender Arm ist und vorzugsweise mit einem Gleitstück (36) an der Steuerbahn (28) anliegt.

26. Einrichtung nach einem der Ansprüche 2 bis 25,
**dadurch gekennzeichnet, daß** der Antrieb (80, 81) zum Drehen der Schaltwelle (3) um ihre Achse über eine Folgeschaltung mit dem weiteren Antrieb zum Verschieben der Schaltwelle (3) in Achsrichtung wirkverbunden ist.

27. Einrichtung nach einem der Ansprüche 12 bis 26,
**dadurch gekennzeichnet, daß** die in Umfangsrichtung des Steuerteiles (71) verlaufenden Führungsabschnitte (123, 125, 127, 129) jeweils auf unterschiedlichen Radien in bezug auf die Drehachse (85) des Steuerteiles (71) liegen.

28. Einrichtung nach einem der Ansprüche 2 bis 27,
**dadurch gekennzeichnet, daß** der Steuerarm (112) quer von der Schaltwelle (3) absteht.

## Claims

1. An actuating device for automatic operation of manually operated gearboxes of vehicles, by which a gear-shift shaft (3) of the gearbox is displaceable in its axial direction and is rotatable about its axis by way of a drive (39, 79) in order to select a gate and to engage a gear, **characterized in that** the rotatability and the displaceability of the gear-shift shaft (3) is derived from the drive (39, 79) by which a control member (7, 29; 71) is rotatable, the control member (7, 29; 71) comprising a slide-block guide (6, 84) for displacing the gear-shift shaft (3) and a control path (28, 100) for rotating the gear-shift shaft (3).

2. An actuating device for automatic operation of manually operated gearboxes of vehicles, by which a gear-shift shaft (3) of the gearbox is rotatable about its axis by way of a drive (80, 81) in order to select a gate and is displaceable in its axial direction by a further drive in order to engage a gear, wherein the drive (80, 81) for rotating the gear-shift shaft (3) drives a control member (71) comprising a slide-block guide (84) for rotating the gear-shift shaft (3), the gear-shift shaft (3) being connected in a rotationally fixed manner to a control arm (112) engaging with a guide member (113) in the slide-block guide (84), **characterized in that** the control member (71) is driven in a rotatable manner and is connected for driving purposes to the drive (80, 81) by way of a reduction gear (77, 78).

3. A device according to Claim 1 or 2, **characterized in that** the drive (39; 79; 80, 81) is a piston-cylinder unit which can preferably be actuated hydraulically, and the drive (39; 79; 80, 81) preferably comprises a toothed rack (51, 78) meshing with a gearwheel (53, 77) connected to the control member (7, 29; 71) in a rotationally fixed manner.

4. A device according to one of Claims 1 to 3, **characterized in that** the axis (8, 85) of the control member (7, 29, 71) is situated parallel to the rotational axis of the gear-shift shaft (3).

5. A device according to one of Claims I to 3, **characterized in that** the axis (85) of the control member (71) is situated at a right angle to the axis of the gear-shift shaft (3).

6. A device according to one of Claims 1 to 5, **characterized in that** the slide-block guide (6, 84) is a depression in the control member (7, 29; 71).

7. A device according to one of Claims 1 and 3 to 6, **characterized in that** the slide-block guide (6) is provided on the periphery of the control part (7, 29) preferably designed in the form of a sleeve.

8. A device according to one of Claims 1 to 6, **characterized in that** the control part (71) is designed in the form of a disc, and the slide-block guide (84) is preferably provided in an underside (83) of the control part (71).

9. A device according to one of Claims 1 and 3 to 8, **characterized in that** the slide-block guide (6, 84) has guide portions (18, 19, 21 to 23, 25, 26; 87, 88, 90 to 92, 94, 95) ascending and descending in the peripheral direction of the control part (7, 29; 71) and associated with the gears of the gearbox to be engaged.

10. A device according to one of Claims 2 to 8, **characterized in that** the slide-block guide (84) has guide portions (124, 126, 128) ascending and descending in the peripheral direction of the control part (71) and provided for rotating the gear-shift shaft (3) about its axis.

11. A device according to one of Claims 1 and 3 to 10, **characterized in that** the slide-block guide (6, 84) has guide portions (20, 24; 89) extending in the peripheral direction of the control part (7, 29; 71) and associated with the neutral setting of the gearbox.

12. A device according to one of Claims 2 to 11, **characterized in that** the slide-block guide (84) has guide portions (123, 125, 127, 129) extending in the peripheral direction of the control part (71) and associated with one respective gate (I to IV) of the gearbox.

13. A device according to one of Claims 1 and 3 to 12, **characterized in that** the control path (28, 100) has portions (30, 33, 35; 101, 104, 107) extending in the peripheral direction of the control part (7, 29; 71) and associated with one respective gate of the gearbox.

14. A device according to Claim 13, **characterized in that** the path portions (30, 33, 35) are at different distances from the rotational axis of the control part (7, 29) and are advantageously arranged on the periphery of the control part (7, 29) and are connected to one another by ascending portions (32, 34).

15. A device according to Claim 13, **characterized in that** the path portions (101, 104, 107) are at different distances from the underside (83) of the control part (71) facing the gear-shift shaft (3), and the path portions (101, 104, 107) are preferably situated on a common circle about the rotational axis (85) of the control part (71) and pass into one another by way of ascending portions (103, 106).

16. A device according to Claim 15, **characterized in that** the end faces (102, 105, 108) of the path portions (101, 104, 107) are situated parallel to one another and to the underside (83) of the control part (71).

17. A device according to one of Claims 14 to 16, **characterized in that** the guide portions (20, 24; 89, 93) of the slide-block guide (6, 84) extending in the peripheral direction are associated with the ascending portions (32, 34, 103, 106) of the control path (28, 100).

18. A device according to one of Claims 1 and 3 to 17, **characterized in that** a drive part (4), engaging with a guide member (5, 9) in the slide-block guide (6, 84) and preferably prevented from rotating, is mounted in an axially fixed manner on the gear-shift shaft (3).

19. A device according to one of Claims 1 and 3 to 18, **characterized in that** a rotating part (11, 65), resting with a sensing member (12, 70) against the control path (28, 100), is mounted in a rotationally fixed manner on the gear-shift shaft (3).

20. A device according to Claim 19, **characterized in that** the gear-shift shaft (3) is rigidly connected to the rotating part (11).

21. A device according to Claim 19, **characterized in that** the gear-shift shaft (3) is displaceable relative to the rotating part (65).

22. A device according to one of Claims 19 to 21, **characterized in that** the sensing member (12, 70) rests under a force, preferably under a spring force, against the control path (28, 100).

23. A device according to one of Claims 19 to 22, **characterized in that** the rotating part (11, 65) is a sleeve.

24. A device according to one of Claims 19 to 23, **characterized in that** the rotating part (65) is constructed in the manner of a rocker, and the sensing member (70) is advantageously provided on an arm (66) of the rotating part (65), and a returning member (75) resting against the control member (71) under a spring force is preferably provided on the other arm (67).

25. A device according to one of Claims 19 to 23, **characterized in that** the sensing member (12) is an arm projecting transversely from the rotating part (11) and preferably rests with a sliding member (36) against the control path (28).

26. A device according to one of Claims 2 to 25, **characterized in that** the drive (80, 81) for rotating the gear-shift shaft (3) about its axis is operatively connected by way of a sequential control to the further drive in order to displace the gear-shift shaft (3) in the axial direction.

27. A device according to one of Claims 12 to 26, **characterized in that** the guide portions (123, 125, 127, 129) extending in the peripheral direction of the control part (71) rest on different respective radii with respect to the rotational axis (85) of the control part (71).

28. A device according to one of Claims 2 to 27, **characterized in that** the control arm (112) projects transversely from the gear-shift shaft (3).

## Revendications

1. Dispositif de commande pour automatiser des boîtes de vitesses manuelles de véhicules, au moyen duquel un arbre de commutation (3) de la boîte de vitesses peut tourner autour de son axe et est mobile en translation dans sa direction axiale pour sélectionner les voies et pour engager les rapports de vitesses, **caractérisé en ce que** la mobilité en rotation et en translation de l'arbre de commutation (3) est dérivée d'un l'entraînement (39, 79) au moyen duquel peut tourner un élément de commande (7, 29 ; 71) qui comprend un guidage à coulisse (6, 84) pour la translation et une piste de commande (28, 100) pour 1a rotation de l'arbre de commutation (3).

2. Dispositif de commande pour automatiser des boîtes de vitesses manuelles de véhicules, au moyen duquel un arbre de commutation (3) de la boîte de vitesses peut tourner autour de son axe via un entraînement (80, 81) pour sélectionner les voies et est mobile en translation dans sa direction axiale via un autre entraînement pour engager les rapports de vitesses, dans lequel l'entraînement (80, 81) destiné à la rotation de l'arbre de commutation (3) entraîne un élément de commande (71) qui comprend un guidage à coulisse (84) pour la rotation de l'arbre de commutation (3), qui est relié solidairement en rotation à un bras de commande (112) qui s'engage par un élément de guidage (113) dans le guidage à coulisse (84), **caractérisé en ce que** l'élément de commande (71) est entraîné en rotation et est relié à l'entraînement (80, 81) via un mécanisme intermédiaire (77, 78).

3. Dispositif selon l'une ou l'autre des revendications 1 et 2, **caractérisé en ce que** l'entraînement (39 ; 79 ; 80, 81) est une unité à piston-et-cylindre qui peut être actionnée de préférence par voie hydraulique, et **en ce que** l'entraînement (39 ; 79 ; 80, 81) comprend de préférence une crémaillère (51, 78) qui engrène avec une roue dentée (53, 77) reliée solidairement en rotation à l'élément de commande (7, 29 ; 71).

4. Dispositif selon l'une quelconque des revendications 1 à 3, **caractérisé en ce que** l'axe (8, 85) de l'élément de commande (7, 29, 71) se trouve parallèlement à l'axe de rotation de l'arbre de commutation (3).

5. Dispositif selon l'une quelconque des revendications 1 à 3, **caractérisé en ce que** l'axe (85) de l'élément de commande (71) se trouve perpendiculairement à l'axe de l'arbre de commutation (3).

6. Dispositif selon l'une quelconque des revendications 1 à 5, **caractérisé en ce que** le guidage à coulisse (6, 84) est un renfoncement dans l'élément de commande (7, 29 ; 71).

7. Dispositif selon l'une quelconque des revendications 1 et 3 à 6, **caractérisé en ce que** le guidage à coulisse (6) est prévu sur la périphérie de la partie de commande (7, 29) qui est réalisée de préférence en forme de douille.

8. Dispositif selon l'une quelconque des revendications 1 à 6, **caractérisé en ce que** la partie de commande (71) est réalisée sous forme de disque, et **en ce que** le guidage à coulisse (84) est prévu de préférence sur une face inférieure (83) de la partie de commande (71).

9. Dispositif selon l'une quelconque des revendications 1 et 3 à 8, **caractérisé en ce que** le guidage à coulisse (6, 84) comprend des tronçons de guidage (18, 19, 21 à 23, 25, 26 ; 87, 88, 90 à 92, 94, 95) ascendants et descendants en direction périphérique de la partie de commande (7, 29 ; 71), qui sont associés aux rapports de vitesses à engager de la boîte de vitesses.

10. Dispositif selon l'une quelconque des revendications 2 à 8, **caractérisé en ce que** le guidage à coulisse (84) comprend des tronçons de guidage (124, 126, 128) ascendants et descendants en direction périphérique de la partie de commande (71), qui sont prévus pour la rotation de l'arbre de commutation (3) autour de son axe.

11. Dispositif selon l'une quelconque des revendications 1 et 3 à 10, **caractérisé en ce que** le guidage à coulisse (6, 84) comprend des tronçons de guidage (20, 24 ; 89, 93) qui s'étendent en direction périphérique de la partie de commande (7, 29 ; 71) et qui sont associés à la position neutre de la boîte de vitesses.

12. Dispositif selon l'une quelconque des revendications 2 à 11, **caractérisé en ce que** le guidage à coulisse (84) comprend des tronçons de guidage (123, 125, 127, 129) qui s'étendent en direction périphérique de la partie de commande (71) et qui sont associés chacun à une voie (I à IV) de la boîte de vitesses.

13. Dispositif selon l'une quelconque des revendications 1 et 3 à 12, **caractérisé en ce que** la piste de commande (28, 100) comprend des tronçons de piste (30, 33, 35 ; 101, 104, 107) qui s'étendent en direction périphérique de la partie de commande (7, 29 ; 71) et auxquels est associée une voie respective de la boîte de vitesses.

14. Dispositif selon la revendication 13, **caractérisé en ce que** les tronçons de piste (30, 33, 35) présentent des distances différentes vis-à-vis de l'axe de rotation de la partie de commande (7, 29) et sont agencés de préférence sur la périphérie de la partie de commande (7, 29) et reliés les uns aux autres par des tronçons en pente (32, 34).

15. Dispositif selon la revendication 13, **caractérisé en ce que** les tronçons de piste (101, 104, 107) présentent des distances différentes vis-à-vis de la face inférieure (83), orientée vers l'arbre de commutation (3), de la partie de commande (71), et **en ce que** les tronçons de piste (101, 104, 107) se trouvent de préférence sur un cercle commun autour de l'axe de rotation (85) de la partie de commande (71) et se transforment les uns dans les autres par des tronçons en pente (103, 106).

16. Dispositif selon la revendication 15, **caractérisé en ce que** les faces frontales (102, 105, 108) des tronçons de piste (101, 104, 107) se trouvent parallèlement les unes aux autres et à la face inférieure (83) de la partie de commande (71).

17. Dispositif selon l'une quelconque des revendications 14 à 16, **caractérisé en ce que** les tronçons de guidage (20, 24 ; 89, 93) du guidage à coulisse (6, 84) qui s'étendent en direction périphérique sont associés aux troncons en pente (32, 34 ; 103, 106) de la piste de commande (28, 100).

18. Dispositif selon l'une quelconque des revendications 1 et 3 à 17, **caractérisé en ce qu'**une partie d'entraînement (4) est agencée de façon axialement immobile sur l'arbre de commutation (3) et s'engage avec un élément de guidage (5, 9) dans le guidage à coulisse (6) et est de préférence bloquée à l'encontre d'une rotation.

19. Dispositif selon l'une quelconque des revendications 1 et 3 à 18, **caractérisé en ce qu'**une partie de rotation (11, 65) est agencée solidairement en rotation sur l'arbre de commutation (3) et s'appuie par un élément de palpage (12, 70) contre la piste de commande (28, 100).

20. Dispositif selon la revendication 19, **caractérisé en ce que** l'arbre de commutation (3) est relié solidairement à la partie de rotation (11).

21. Dispositif selon la revendication 19, **caractérisé en ce que** l'arbre de commutation (3) est mobile en translation par rapport à la partie de rotation (65).

22. Dispositif selon l'une quelconque des revendications 19 à 21, **caractérisé en ce que** l'élément de palpage (12, 70) s'appuie sous une force, de préférence sous la force d'un ressort, contre la piste de commande (28, 100).

23. Dispositif selon l'une quelconque des revendications 19 à 22, **caractérisé en ce que** la partie de rotation (11, 65) est une douille.

24. Dispositif selon l'une quelconque des revendications 19 à 23, **caractérisé en ce que** la partie de rotation (65) est réalisée sous forme de bascule, **en ce que** l'élément de palpage (70) est prévu de préférence sur un bras (66) de la partie de rotation (65), et **en ce qu'**il est prévu de préférence sur l'autre bras (67) un élément de rappel (75) qui s'appuie sous la force d'un ressort contre l'élément de commande (71).

25. Dispositif selon l'une quelconque des revendications 19 à 23, **caractérisé en ce que** l'élément de palpage (12) est un bras en saillie transversalement de la partie de rotation (11) et s'appuie de préférence avec un patin coulissant (36) contre la piste de commande (28).

26. Dispositif selon l'une quelconque des revendications 2 à 25, **caractérisé en ce que** l'entraînement (80, 81) destiné à la rotation de l'arbre de commutation (3) autour de son axe est relié en action via une commutation de passage à l'autre entraînement destiné à la translation de l'arbre de commutation (3).

27. Dispositif selon l'une quelconque des revendications 12 à 26, **caractérisé en ce que** les tronçons de guidage (123, 125, 127, 129) qui s'étendent en direction périphérique de la partie de commande (71) se trouvent chacun sur des rayons différents par rapport à l'axe de rotation (85) de la partie de commande (71).

28. Dispositif selon l'une quelconque des revendications 2 à 27, **caractérisé en ce que** le bras de commande (112) fait saillie transversalement de l'arbre de commutation (3).
